# EUROPEAN PATENT APPLICATION

(11) **EP 2 117 068 A1**
(43) Date of publication of application: **11.11.2009**
(21) Application number: 08704169.5
(22) Date of filing: 30.01.2008
(51) Int. Cl.: H01M 4/96, B01J 35/10, B01J 37/08, H01M 4/88, H01M 8/10

(54) **ELECTRODE CATALYST FOR FUEL CELL AND FUEL CELL USING THE SAME**

(30) Priority: 01.02.2007 JP 2007023252
(71) Applicant: National Institute of Advanced Industrial Science and Technology, Tokyo 100-8921 (JP)
(72) Inventor: HAYASHI, Akari, Tokyo 135-0064 (JP); YAGI, Ichizou, Tokyo 135-0064 (JP); KIMIJIMA, Kenichi, Tokyo 135-0064 (JP)
(74) Representative: Forstmeyer, Dietmar
(86) International application number: PCT/JP2008/051406
(87) International publication number: WO 2008/093731

(57) **Abstract**

To provide an electrode catalyst for fuel cells, which is obtained efficiently by a simple process, without using a silica template, unlike in the conventional process, which is relatively large in mesopore diameter (5 nm or more), which enables catalyst particles deposited stably in the mesopores, and which can readily develop a highly triple-phase interface state.

Such an electrode catalyst for a fuel cell is constituted with: a mesoporous carbon support obtained by heating and baking for carbonization a mixture of a surfactant and carbon precursors; and catalyst particles carried by the support. Further, it is possible to obtain a fuel cell, which has: a fuel electrode; an air electrode; and an electrolyte membrane interposed between the electrodes, in which at least one of the fuel electrode and the air electrode contains the electrode catalyst.

## Description

### TECHNICAL FIELD

The present invention relates to an electrode catalyst for a fuel cell, and to a fuel cell using the same.

### BACKGROUND ART

Fuel cells, especially polymer electrolyte fuel cells (PEFCs), have recently attracted remarkable attention as energy sources of transportation means, from the viewpoint that they work at low temperatures and can be formed in small-sizes.
PEFCs generally have a structure in which a fuel electrode (anode) and an air electrode (cathode) are disposed so as to sandwich a solid polymer electrolyte membrane between those, and in which a fuel, such as hydrogen, natural gas, or methanol, is supplied to the anode and an oxidizing agent, such as oxygen, or the air, is supplied to the cathode. Hydrogen ions and electrons are generated by an oxidation reaction on the anode. The hydrogen ions are transferred to the cathode by the solid polymer electrolyte membrane, and the transferred hydrogen ions are allowed to react with the oxidizing agent supplied from the outside, to generate water. On the anode, on the other hand, the produced electrons reach the cathode through any external circuits, upon which current flows in that structure.

As one measures taken to improve the power generation characteristics of such PEFCs, it is important to enhance the activity of catalysts to be used in the anode and cathode. Developments and studies of the catalysts themselves and catalyst supports which carry the catalysts thereon, have been enthusiastically made.

In particular, in order to run the catalyst reaction efficiently on each electrode of those anode and cathode, it is necessary to positively create the portion where three phases of gas (oxygen and hydrogen which are active materials), ionomers as the electrolyte, and the catalyst are united in each electrode, that is, a triple-phase interface. Thus, various catalyst supports have been proposed which are to increase that triple-phase interface as much as possible.

As one of typical catalyst supports, there are proposed amorphous microporous carbon powders made, for example of, activated carbon and carbon black (Non-patent Document 1).
This activated carbon generally has a primary particle diameter of 40 to 50 nm, and is provided with micropores (2 nm or less) in a particle. Catalyst metal particles are carried in the pores of this support or on the surface of the support, and are mixed with Nafion ionomers. Under this state, a catalyst layer is formed. When a fuel cell catalyst layer is actually formed, the catalyst particles and ionomers are present in macropores formed between carbon black particles, and oxygen gas passed through pores and protons transported by the ionomers are allowed to react with each other. This shows that it is fairly reasonable to say that the catalyst metal particles exist at the triple-phase interface.

However, when a conventional carbon black support is used, there arises the problem that catalyst particles carried in micropores cannot be brought into contact with ionomers and do not contribute to the reaction, resulting in a low catalyst utilization (efficiency). Further, the stability of the catalyst particles carried on this support is not so high. Thus, if the catalyst is mixed with the ionomers required during the course of assembly of an actual fuel cell, there arises the problem that the catalyst particles slip out of the carbon black support, and it is also pointed out that a platinum catalyst and a carbon support are deteriorated in a long-term operation.

In order to solve these problems, there is proposed "a catalyst support for fuel cells, which is obtained by combining mesoporous carbon particles with carbon materials, such as carbon black" (Patent Document 1).
This mesoporous carbon particles are those described as "almost no pore having a size of 10 nm or more exists, the distribution of the pores is concentrated at 2 to 3 nm, and pores are present in the whole range of the measured pore diameter distribution".
However, in order to obtain these mesoporous carbon particles, it is necessary to adopt the following complicated steps. Specifically, porous particles, such as silica (silica template) and titania, which have an intended pore distribution (mesoporous), are made to adsorb and/or be impregnated with a carbon-containing molecule, such as sucrose. Then, the resultant molecule is carbonized in an inert atmosphere, and then the template particles, such as silica, are dissolved and/or removed by hydrofluoric acid, NaOH/EtOH, or the like.
Further, in this case, mesoporous silica is in such a state that rod-like carbon is formed in a pore portion of the mesoporous silica, and that these carbon rods are bonded by carbon produced by carbonization in micropores of the mesoporous silica. Thus, the portion, called mesopores, of the mesoporous carbon material constitutes the wall of the mesoporous silica, and only relatively small mesopores of pore size about 3 nm or less are obtained. Therefore, this mesoporous carbon synthesized through silica is unnecessarily sufficient as the support that develops the above triple-phase interface.

Further, recently, there is proposed "an electrode catalyst for fuel cells, which uses a mesoporous carbon material as a support, in which the carbon material has a surface resistance of 250 mΩ/cm² or less measured under a pressure of 75.4 kgf/cm² and the average diameter of the mesopores is 2 to 20 nm" (Patent Document 2).
However, in order to obtain this mesoporous carbon material, it is necessary to combine the steps of: (a) a step of producing 100 parts by mass of a precursor mixture including 5 to 15 parts by mass of phenanthrene, 10 to 35 parts by mass of an acid, and 55 to 80 parts by mass of a solvent; (b) a step of impregnating the mesoporous silica with the above precursor mixture; (c) a step of heat-treating the resultant product obtained in the above step (b); (d) a step of carbonizing the resultant product obtained in the above step (c); and (e) a step of removing the above mesoporous silica, by using a solvent capable of selectively dissolving only silica. Thus, this mesoporous carbon material has the disadvantage that the processes are quite complicated, similar to that in the above Patent Document 1.

A method is also proposed in which a solution including a surfactant and carbon precursors is applied to a silicon substrate, and then the coated membrane is dried, baked and carbonized, to form a carbon membrane having mesopores on the substrate (Non-patent Document 2).
However, this reference relates to a method of forming a non-self-standing carbon membrane having mesopores, and nothing is described as to the method preparing self-standing mesoporous carbon fine-particles, and also it is needless to say that nothing is taught in relation to the uses and applications of the carbon fine-particles.

Non-patent Document 1: edited by Konosuke IKEDA, "EVERYTHING IN FUEL CELLS", p.138-139, Nippon Jitsugyo Publishing
Non-patent Document 2: Chem. Commun. 2005, p.2125-2127
Patent Document 1: JP-A-2004-71253 ("JP-A" means unexamined published Japanese patent application)
Patent Document 2: JP-A-2006-321712

### SUMMARY OF THE INVENTION

### PROBLEMS THAT THE INVENTION IS TO SOLVE

It is an object of the present invention to provide an electrode catalyst for fuel cells, which is obtained efficiently by a simple process, without using a silica template, unlike in the conventional process, which is relatively large in mesopore diameter (5 nm or more), which enables catalyst particles to be carried stably in the mesopores, and which can readily develop a highly triple-phase interface state. It is another object of the present invention to provide a fuel cell using that electrode catalyst.

### MEANS TO SOLVE THE PROBLEMS

The inventors of the present invention, having made earnest studies as to the above problems in the conventional techniques, have found that when using, as a support, a mesoporous carbon material that is prepared by a specified method, the above problems can be solved, thereby to attain the present invention.
That is, according to this application, the following inventions are provided.
(1) An electrode catalyst for a fuel cell, comprising: a mesoporous carbon support obtained by drying, baking, and carbonizing a mixture of a surfactant and carbon precursors; and catalyst particles carried by the support.
(2) A fuel cell, having: a fuel electrode; an air electrode; and an electrolyte membrane interposed between the electrodes, wherein at least one of the fuel electrode and the air electrode contains the electrode catalyst according to the above (1).

### ADVANTAGEOUS EFFECTS OF THE INVENTION

(1) The electrode catalyst of the present invention for fuel cells is specified by the use of, as a support, a mesoporous carbon support which is obtained by drying, baking, and carbonizing a mixture of a surfactant and carbon precursors. A mesoporous carbon material obtained in the above, can be synthesized by such a simple step that the surfactant and the carbon precursors are baked and carbonized, by utilizing self-organization of those, thereby to conduct finally the carbonization and the removal of the surfactant at the same time.
(2) The mesoporous carbon particles obtained by the synthetic method as in the above, have the physical properties of: a specific surface area of 500 to 700 cm²/g; a regular mesoporous structure; and an average diameter of 5 to 10 nm.
(3) A conventional mesoporous carbon material that has been used as this type of catalyst support, needs to adopt the following complicated steps of: making to adsorb and impregnated porous particles, such as silica (silica template) and titania, having an intended pore distribution (mesoporous), with a carbon-containing molecule, such as sucrose; carbonizing the carbon-containing molecule in an inert atmosphere; and then dissolving/removing the template particles, such as silica, by hydrofluoric acid, NaOH/EtOH, or the like. However, the mesoporous carbon material according to the present invention, has the advantage that a highly active catalyst support can be obtained by a simple process, without adopting such a complicated process.
(4) Further, the above conventional catalyst support is in such a state that rod-like carbons are formed in pore portions of mesoporous silica and these carbon rods are bonded by carbon produced by carbonization in micropores of the mesoporous silica. Thus, the portion, called mesopore, of the mesoporous carbon material constitutes the wall of the mesoporous silica, and only relatively small mesopores are obtained. Thus, this mesoporous carbon synthesized through silica is unnecessarily sufficient as the support that develops the triple-phase interface, which is an important factor to determine improvement in a catalyst activity.
   Contrary to the above, since the catalyst support according to the present invention has the aforementioned specific physical properties, the catalyst particles can be stably carried in a large amount in mesopores, and also the contact between polymer electrolyte ionomer and the catalyst particles in the mesopores can be enhanced, thereby to make it possible to attain the triple-phase interface state with ease.
(5) Further, the fuel cell according to the present invention is more resistant to deterioration of the support than a conventionally known fuel cell using carbon black as a support. Further, even if platinum particles are dissolved in a solution, they are trapped in pores, so that the loss of platinum is reduced, and thus the fuel cell of the present invention is high in the activity and excellent in the durability.
   Further, even if H₂O₂ which is a cause of deteriorations is occurred in pores, it can be reduced to H₂O by another catalyst particles existing in the pores, and only a limited amount of ionomers can exist in the pores. Thus, the growth of the catalyst particles can be restricted, leading to prolonged catalyst life, and making it possible to operate the fuel cell of the present invention in a long term.

### BRIEF DESCRIPTION OF THE DRAWINGS

[Fig. 1]
   A nitrogen adsorption isotherm and a pore distribution curve of the mesoporous carbon material obtained in Synthetic Example 1
[Fig. 2]
   A SEM photograph of the mesoporous carbon material obtained in Synthetic Example 1
[Fig. 3]
   A TEM photograph of the mesoporous carbon material obtained in Synthetic Example 1
[Fig. 4]
   An X-ray structural diffraction diagram of the mesoporous carbon material obtained in Synthetic Example 1
[Fig. 5]
   A nitrogen adsorption isotherm, and a curve showing the relationship between the amount of Pt deposited and the pore distribution of the mesoporous carbon material, with respect to the Pt deposited electrode catalyst obtained in Example 1
[Fig. 6]
   A SEM photograph of the 30% Pt deposited electrode catalyst
[Fig. 7]
   A TEM photograph of the 30% Pt deposited electrode catalyst (at a low magnification)
[Fig. 8]
   A TEM photograph of the 30% Pt deposited electrode catalyst (at a high magnification)
[Fig. 9]
   An oxygen reduction reactive curve (sweeping in the direction of negative potential) of the cathodes of Example 1 (20-wt% Pt deposited catalyst) and Reference Example
[Fig. 10]
   An oxygen reduction reactive curve (when no Nafion is present and after Nafion is cast: sweeping in the direction of positive potential) of the cathode of Example 1 (30-wt% Pt deposited catalyst)
[Fig. 11]
   An oxygen reduction reactive curve (dependency on Nafion-diluting solvents: sweeping in the direction of positive potential) of the cathode of Example 1 (30-wt% Pt deposited catalyst)
[Fig. 12]
   An oxygen reduction reactive curve (sweeping in the direction of negative potential) of the cathode of Example 2
[Fig. 13]
   An oxygen reduction reactive curve (sweeping in the direction of negative potential) of the cathodes of Example 1 and Comparative Example 1
[Fig. 14]
   A cyclic voltammogram of the cathode of Example 1 in an argon atmosphere
[Fig. 15]
   A cyclic voltammogram of the cathode of Comparative Example 2 in an argon atmosphere
[Fig. 16]
   An oxygen reduction reactive curve (sweeping in the direction of negative potential) of the cathode of Example 1
[Fig. 17]
   An oxygen reduction reactive curve (sweeping in the direction of negative potential) of the cathode of Comparative Example 2
[Fig. 18]
   A nitrogen adsorption isotherm, and a curve showing the relationship between the amount of Pt deposited and the pore distribution of the mesoporous carbon material, with respect to Example 3
[Fig. 19]
   A SEM photograph of the 30% Pt-ac electrode catalyst
[Fig. 20]
   A TEM photograph of the 30% Pt-ac electrode catalyst (at a low magnification)
[Fig. 21]
   A TEM photograph of the 30% Pt-ac electrode catalyst (at a high magnification)
[Fig. 22]
   An oxygen reduction reactive curve (sweeping in the direction of positive potential) of the electrode catalyst (30-wt% Pt-ac electrode catalyst) of Example 3 (also shown the oxygen reduction reactive curve of the electrode catalyst (30-wt% Pt deposited electrode catalyst) of Example 1)
[Fig. 23]
   A SEM photograph of the 30% Pt-Cl electrode catalyst
[Fig. 24]
   A TEM photograph of the 30% Pt-Cl electrode catalyst
[Fig. 25]
   A TEM photograph of the 30% Pt-Cl electrode catalyst
[Fig. 26]
   An oxygen reduction reactive curve: sweeping in the direction of positive potential) of the electrode catalyst (30-wt% Pt-Cl electrode catalyst) of Example 4 (also shown the oxygen reduction reactive curves of the electrode catalyst (30-wt% Pt deposited electrode catalyst) of Example 1 and the electrode catalyst (30-wt% Pt-ac electrode catalyst) of Example 3)

### BEST MODE FOR CARRYING OUT THE INVENTION

The electrode catalyst of the present invention for fuel cells is characterized by the use of, as a support, a mesoporous carbon support obtained by baking and carbonizing a mixture of a surfactant and carbon precursors.
This mesoporous carbon material can be synthesized by such a simple process in which a surfactant and carbon precursors are baked and carbonized by making use of self-organization of those, to carry out finally the carbonization of the carbon precursors and the removal of the surfactant at the same time.

Mesoporous carbon particles obtained by the above synthetic method have the following physical properties: specific surface area of 500 to 700 cm²/g, regular mesoporous structure, and average particle diameter of 5 to 10 nm.

Next, the method of synthesizing the mesoporous carbon material to be used in the present invention will be explained in detail.
The synthetic method in the present invention utilizes the self-organization of a surfactant and carbon precursors, without using a silica template.
Though no particular limitation is imposed on the surfactant, a nonionic surfactant is preferably used as the surfactant, from the viewpoint of its effective action on the self-organization with the carbon precursor.
As the nonionic surfactant, use may be made, for example, of any of tri-block copolymers which have various polymerization ratios and a molecular weight of about 2,000 to about 13,000, and which are consisted of polyethylene oxide-polypropylene oxide-polyethylene oxide (PEO-PPO-PEO) or polypropylene oxide-polyethylene oxide-polypropylene oxide (PPO-PEO-PPO); as well as polyoxyethylene alkyl ethers in which the alkyl group has 12 to 18 carbon atoms, polyoxyethylene octyl phenyl ether, polyoxyethylene nonyl phenyl ether, sorbitan monopalmitate, sorbitan monolaurate, sorbitan monostearate, sorbitan distearate, sorbitan monooleate, sorbitan sesquioleate, sorbitan trioleate, polyoxyethylenesorbitan monolaurate, polyoxyethylenesorbitan monopalmitate, polyoxyethylenesorbitan monostearate, polyoxyethylenesorbitan monooleate, polyethylene glycol monolaurate, polyethylene glycol monostearate, polyethylene glycol distearate, polyethylene glycol monooleate, oleic acid monoglyceride, stearic acid monoglyceride, polyoxyethylenelaurylamine, and polyoxyethylenestearylamine. Particularly, the tri-block copolymer or the polyoxyethylene alkyl ether is preferably used in the reaction system in the present invention.

Any material may be used as the carbon precursor without any particular limitation as long as it is a carbon-containing compound, is polymerized in the presence of a surfactant, and is made into a mesoporous carbon material after baking and carbonizing the polymerized product. It is preferable to use, as the carbon precursor, an organic compound with a benzene ring having an OH group thereon, in combination with an organic compound having a CO group, from the viewpoint of undergoing polymerization readily.
Examples of the organic compound with a benzene ring having an OH group thereon, include phenols, such as phenol and resorcinol; and examples of the organic compound having a CO group include aldehydes, such as formaldehyde and acetaldehyde.
The carbon precursor preferably used in the present invention is resorcinol and formaldehyde.
There is no particular limitation to the ratio of the carbon precursor to the surfactant to be used. When resorcinol and formaldehyde are used as the carbon precursor, this ratio by weight is preferably set, for example, to: resorcinol:formaldehyde:surfactant = 1:0.31:0.57, in terms of weight ratio.

In the present invention, a mesoporous carbon material may be fundamentally obtained by baking and carbonizing a mixture of the above surfactant and the above carbon precursor. It is preferable to adopt an embodiment in which a mixture of the surfactant and the carbon precursor is dissolved in an organic solvent/water, followed by heating preferably at 95 to 105°C, to thereby first polymerize the carbon precursor.
In that case, as the organic solvent, any material may be used without any particular limitation insofar as it dissolves the reaction materials or is miscible with water and, for example, an alcohol is used. The organic solvent preferably used in the present invention is ethanol.
Further, it is preferable to use a reaction accelerator, such as triethyl orthoacetate, or a reaction aid, to accelerate a carbonization reaction between the surfactant and the carbon precursor.
Further, the above reaction may be run under any of acidic condition and alkaline condition.
In the case of under an acidic condition, a mesoporous carbon material like a large bulk is obtained, alternatively in the case of under an alkaline condition, a mesoporous carbon material like a fine powder is obtained.

In the present invention, after the above step of polymerizing the carbon precursor, the polymerized carbon precursor is baked preferably in an inert gas atmosphere, such as argon or nitrogen, to carbonize the polymer and also to remove the surfactant at the same time, thereby obtaining the target mesoporous carbon material.
The baking and carbonization conditions can be appropriately determined, in consideration of the types of surfactant and carbon precursor to be used and the physical properties of a desired carbon porous material.
In the present invention, for example, the baking and carbonization conditions can be set to: at 400°C for 3 hours, and then at 800°C for 6 hours.

There is no particular limitation to the catalyst to be carried (deposited) by the above specific mesoporous carbon material according to the present invention, and use may be made of any of conventionally known metal catalysts, and the like.
Examples of metals used for these metal catalysts may include the VIII-group elements, such as platinum, ruthenium, palladium, osmium, iridium, rhodium, Fe, Co, and Ni; the I-group elements, such as gold, silver, and Cu; the IV-group elements, such as Ti and Zr; the V-group elements, such as V and Nb; and the VI-group elements, such as Cr, Mo, and W. It is preferable to use platinum among these metals.
These metals may be used either singly or in combinations of two or more. The metal catalyst is preferably in the form of particles, and more preferably in the form of metal particles having an average particle diameter of about 1 to about 5 nm.
Although no particular limitation is imposed on the ratio by mass of the metal catalyst to the support, the ratio of the metal catalyst is preferably 10 to 60% by mass, with respect to the support.

As the method of supporting the metal catalyst on the mesoporous carbon support, any of conventionally known support methods may be adopted. For example, use may be made of a method in which a catalyst metal precursor solution is dipped (impregnated), and then the metal catalyst precursor is reduced; or a method in which the support is impregnated with the metal catalyst colloid solution.
In order to specifically obtain a support catalyst by the impregnation method, for example, the following method can be taken. That is, an aqueous solution including the metal catalyst precursor, such as tetraammineplatinate (II) nitrate, is added to the mesoporous carbon powder, and the resultant solution is stirred. The solution is then dried at ambient temperature under a nitrogen atmosphere for 1 hour under stirring, and then the solvent is completely vaporized at 80°C to dry. Then, a solvent, such as dichloromethane, is added thereto, and the solution is stirred, followed by distilling off the solvent, thereby making the platinum catalyst precursor adsorb to the inside of hydrophobic pores. Then the adsorbed precursor is heated in an inert atmosphere, to reduce the same.

The main point for the electrode catalyst of the present invention for fuel cells is the use of, as a support, a mesoporous carbon support that is obtained by drying, baking, and carbonizing a mixture of a surfactant and carbon precursors. The thus-obtained mesoporous carbon material can be synthesized by such a simple process in which the surfactant and the carbon precursors are baked and carbonized by making use of self-organization of those, to finally carry out the carbonization and the removal of the surfactant at the same time.
Mesoporous carbon material particles obtained by the above synthetic method have the physical properties: specific surface area of 500 to 700 cm²/g, regular mesoporous structure, and average particle diameter of 5 to 10 nm.

As mentioned above, the conventional mesoporous carbon material that has been used as this type of catalyst support, needs to adopt the following complicated steps: i.e. porous particles, such as silica (silica template) and titania, having an intended pore distribution (mesoporous) are made to adsorb and be impregnated with a carbon-containing molecule, such as sucrose, and the carbon-containing molecule is carbonized in an inert atmosphere, and then the template particles, such as silica, are dissolved/removed by hydrofluoric acid, NaOH/EtOH, or the like. However, the mesoporous carbon material according to the invention has the advantage that a highly active catalyst support can be obtained by a simple process, without adopting such a complicated process.
Further, the above conventional catalyst support is in such a state that rod-like carbon is formed in a pore portion of mesoporous silica, and these carbon rods are bonded by carbon produced by carbonization in micropores of the mesoporous silica. Thus, the portion, called mesopore, of the mesoporous carbon material constitutes the wall of the mesoporous silica, and only relatively small mesopores are obtained. Therefore, this mesoporous carbon synthesized through silica is unnecessarily sufficient as the support that develops the triple-phase interface, which is an important factor to determine improvement in the above catalyst activity.

Contrary, since the catalyst support according to the present invention has the aforementioned specific physical properties, the catalyst particles can be stably supported in a large amount in mesopores, and also the contact between polymer electrolyte ionomer and catalyst particles in the mesopores can be enhanced, thereby to make it possible to attain the triple-phase interface state readily.
As the polymer electrolyte ionomer, though any conventionally known one may be used, it is preferable to use Nafion. As the diluting solvent for Nafion, a solvent, for example, an alcohol-type solvent, such as ethanol, 1-propanol or 2-propanol, or a water/alcohol-type solvent, such as water/ethanol, may be used, and it is preferable to use a Nafion solution diluted with a more hydrophobic solvent, such as 2-propanol, to make it possible to add much Nafion in the pores to thereby accelerate the formation of a triple-phase interface, because the inside of the pores of the mesoporous carbon material is hydrophobic.

The fuel cell according to the present invention is characterized that it is provided with a fuel electrode, an air electrode, and an electrolyte membrane interposed between those electrodes, in which at least one of the fuel electrode and the air electrode contains the aforementioned specific electrode catalyst.

This fuel cell is, though not particularly limited to, preferably a polymer electrolyte fuel cell (PEFC).
The PEFC according to the present invention may have any structure insofar as it includes a solid electrolyte membrane, the fuel electrode and the air electrode, and at least one of the fuel electrode and the air electrode contains the above electrode catalyst. For example, the PEFC includes: a membrane-electrode assembly (MEA), which contains the above fuel cell electrode catalyst and a gas diffusion layer (GDL) which holds the solid electrolyte membrane and is formed of a carbon powder, and the like; and a product obtained by sandwiching the MEA between separators.

For example, the membrane-electrode assembly (MEA) may be produced, by casting, a dispersion solution of the above support catalyst on a carbon rod, followed by drying, and further by casting, a polymer electrolyte solution containing Nafion and the like, followed by drying.
Further, when the electrode catalyst according to the present invention is applied to a gas diffusion layer (GDL), it can be used in the same structure as in the case of a conventional fuel cell catalyst layer. In this case, a process of mixing an ionomer with the catalyst is required. Even if the electrode catalyst of the present invention for fuel cells is mixed with the ionomer, the catalyst particles can be hold stably inside of the mesopores.

Further, the fuel cell according to the present invention is more resistant to deterioration of the support than a conventionally known fuel cell using carbon black as the support. Further, even if platinum particles are dissolved in the solution, they are trapped in pores, leading to a reduction in the loss of platinum, and thus the fuel cell according to the present invention is high in the activity and is excellent in the durability.
Further, even if H₂O₂ which is a cause of the deteriorations is occurred in pores, it can be reduced to H₂O by another catalyst particles existing in the pores, and also only a limited amount of ionomers can exist in the pores. Thus, the growth of the catalyst particles can be restricted, leading to a prolonged catalyst life, enabling a long-term operation.

### EXAMPLES

The present invention will be described in more detail based on the following examples.

### Example 1

### (Synthetic Example 1 of a mesoporous carbon material: acidic condition)

Resorcinol (manufactured by Wako Pure Chemical Industries Ltd.) in an amount of 1.65 g was dissolved in 4.35 g of deionized water/5.75 g of ethanol (manufactured by Wako Pure Chemical Industries Ltd.)/0.15 mL of 5M hydrochloric acid (manufactured by Wako Pure Chemical Industries Ltd.). To the resultant solution, 0.945 g of Pluronic F-127 (manufactured by SIGMA) was added, to dissolve the resultant mixture completely. Then, 1.2 g of triethyl orthoacetate (manufactured by Wako Pure Chemical Industries Ltd.) and 1.35 g of 37% formaldehyde manufactured by Wako Pure Chemical Industries Ltd.) were added thereto, and the resultant mixture was stirred at 30°C for 20 minutes. This solution was poured into a Teflon (registered trademark) container, which was then heated at 105°C for 6 hours in an air blowing thermohygrostat (DMK300, manufactured by Yamato Scientific Co., Ltd.), to polymerize resorcinol and formaldehyde.
The thus-obtained orange solid was poured onto a quartz boat, followed by heating over three days according to a day-by-day condition in a nitrogen atmosphere, with an infrared lamp heating treatment device (ULVAC-RIKO, SSA-P610C).
First day: the temperature of the system was raised at a rate of 1°C per minute from 20°C to 400°C. Then, the temperature was kept at 400°C for 3 hours.
Second day and third day: the temperature of the system was raised at a rate of 2°C per minute from 20°C to 800°C. Then, the temperature was kept at 800°C for 3 hours.
The thus-obtained mesoporous carbon material was produced in an amount of 0.8 g as a black block (bulk).

### (Synthetic Example 2 of a mesoporous carbon material: alkaline condition)

The reaction was run in the same manner as in Synthetic Example 1, except that 1.0 mL of 0.5M NaOH (manufactured by Wako Pure Chemical Industries Ltd.) was used in place of hydrochloric acid in Synthetic Example 1.
As a result, 0.8 g of a mesoporous carbon material was obtained as a black powder.

### (Specific surface area of the mesoporous carbon material obtained in Synthetic Example 1 and average diameter of mesopores)

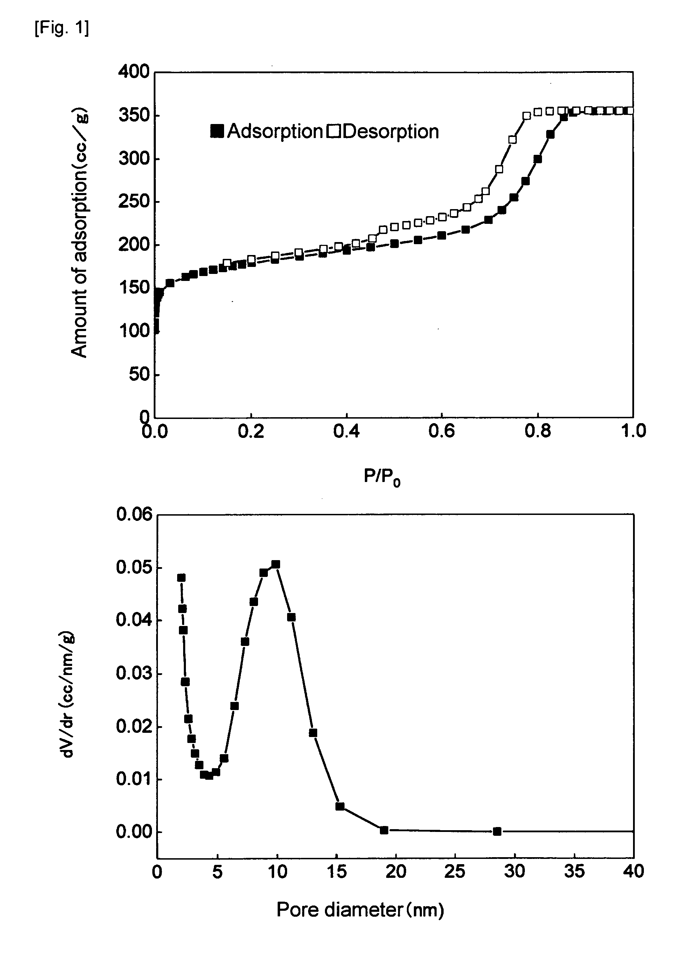

The measurement of adsorption of nitrogen to the product obtained in Synthetic Example 1 was made, using an independent multi-port-type specific surface area/pore distribution measuring device (QUADRASORB SI, manufactured by Qantachrome).
The mesoporous carbon material in an amount of 0.067 g, which was dried at 200°C for 2 hours as a pretreatment, was utilized in measurement. As a result, it was found that the specific surface area was 600 cm²/g and the average pore diameter was 7 to 8 nm. (Fig. 1)

### (SEM observation of the mesoporous carbon material obtained in Synthetic Example 1)

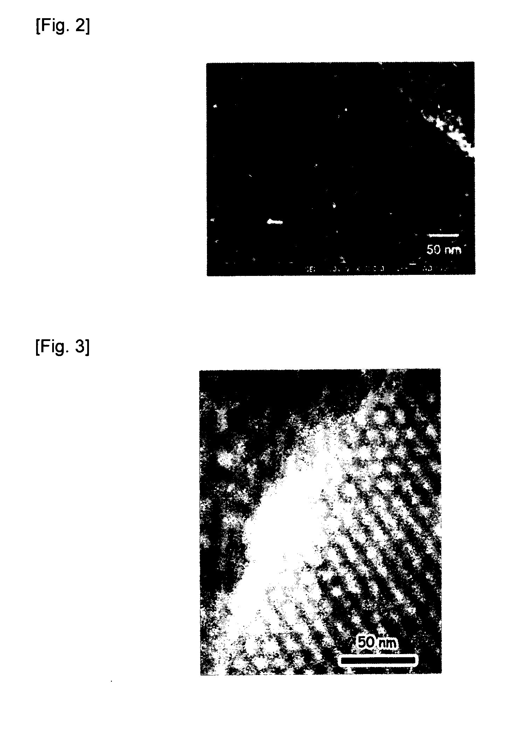

The mesoporous carbon material obtained in Synthetic Example 1, was coated with platinum, followed by observing with a field emission scanning microscope (JSM-7000F, manufactured by JEOL), to find pores having a diameter slightly smaller than 10 nm. (Fig. 2)

### (TEM observation of the mesoporous carbon material obtained in Synthetic Example 1)

The mesoporous carbon material obtained in Synthetic Example 1, was observed by using a transmission electron microscope (H9000, manufactured by HITACHI). As a result, it was found a portion where pores having a diameter slightly smaller than 10 nm existed at random, and a portion where the pores were formed in a hexagonal structure and exactly aligned. (Fig. 3)
However, such a state was observed that the pores which seemed to be arranged at random were arranged in a hexagonal form at a certain angle in the course of changing the angle of the sample stage from +58° to -68°. In other words, it is assumed that all the pores of the mesoporous carbon material obtained in Synthetic Example 1, had a hexagonal structure.

### (Small-angle scattering XRD measurement of the mesoporous carbon material obtained in Synthetic Example 1)

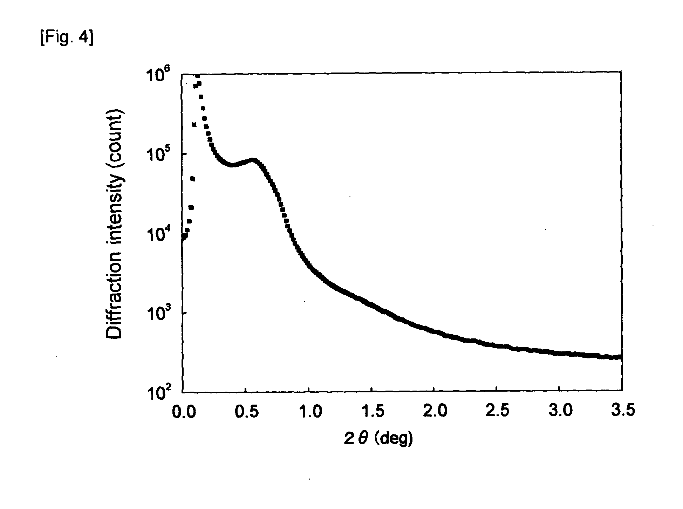

Using a nano-scale X-ray structure evaluation device (Nano-Viewer, manufactured by RIGAKU), the X-ray structure diffraction of the mesoporous carbon material obtained in Synthetic Example 1, was measured. As a result, a peak was observed at an angle 20 of 0.6°, and a second peak was slightly observed at an angle from 1° to 2°. (Fig. 4)
It was thus confirmed that the mesopores had a regular pore structure.

### (Production of an electrode catalyst support)

First, 500 mg of the mesoporous carbon material obtained in Synthetic Example 1, was milled in a mortar. Then, 500 mg of the mesoporous carbon material milled in the mortar, 19 mL of ethanol, and 36 g of 1 mmφ zirconia balls were added in this order in a zirconia container, and the resultant mixture was pulverized by a planetary ball mill quartet (P-6, manufactured by FRITSCH), which was rotated at 450 rpm, for 30 minutes, and that rotating operation was repeated four times. After that, the beads were removed, and the solvent was distilled off from the pulverized product, to obtain a mesoporous carbon material as a powder.

### (Production of an electrode catalyst carrying 20% by weight of Pt on the mesoporous carbon material)

To 100 mg of the powder mesoporous carbon material obtained above, 3.3 mL of an aqueous solution including 59.4 mg of tetraammineplatinate (II) nitrate (manufactured by Aldrich) was added, and the mixture was stirred and dried at 20°C under a nitrogen atmosphere for 1 hour. Then, the mixture was dried at 80°C under a nitrogen atmosphere for 18 hours. Thereto, 40 mL of dichloromethane (manufactured by Wako Pure Chemical Industries Ltd.) was added, followed by stirring for 30 minutes. The obtained mixture was subjected to a rotary evaporator (manufactured by EYELA), to distill the solvent. The powdery sample was taken out of the flask and poured into a quartz boat, followed by heating under a nitrogen atmosphere by an infrared lamp heating treatment device (ULVAC-RIKO, SSA-P610C). The sample was heated at a rate of 1°C/min from 20°C to 210°C, kept at 210°C for 3 hours, heated at a rate of 1°C/min until the temperature was raised to 240°C, and kept at 240°C for 3 hours, to accomplish reduction to Pt particles, thereby producing an electrode catalyst. Electrode catalysts carrying 30% by weight of Pt and 40% by weight of Pt were produced using 89.1 mg and 118.8 mg of tetraammineplatinate (II) nitrate, respectively, in the same manner.

### (Measurement of pore volumes before and after the deposition of Pt on the mesoporous carbon material)

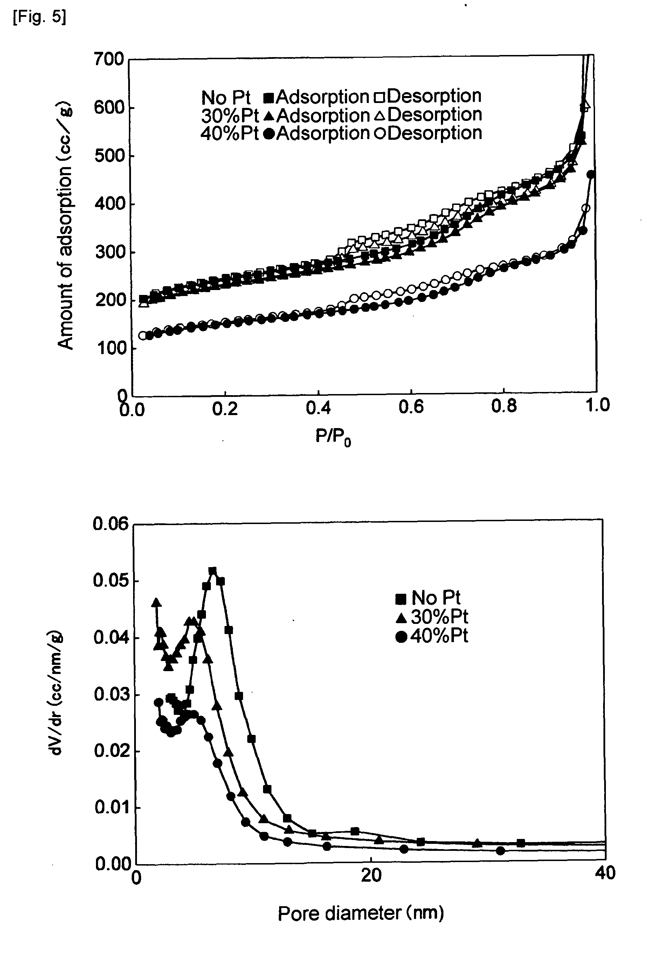

The measurements of adsorption of nitrogen to the products obtained in the above were made, using an independent multi-port-type specific surface area/pore distribution measuring device (QUADRASORB SI, manufactured by Qantachrome).
The mesoporous carbon materials were dried at 200°C for 2 hours as a pretreatment. It was observed that the pore volume was decreased with increase in the amount of Pt to be supported. (Fig. 5)

### (SEM photograph of the electrode catalyst carrying 30% by weight of Pt)

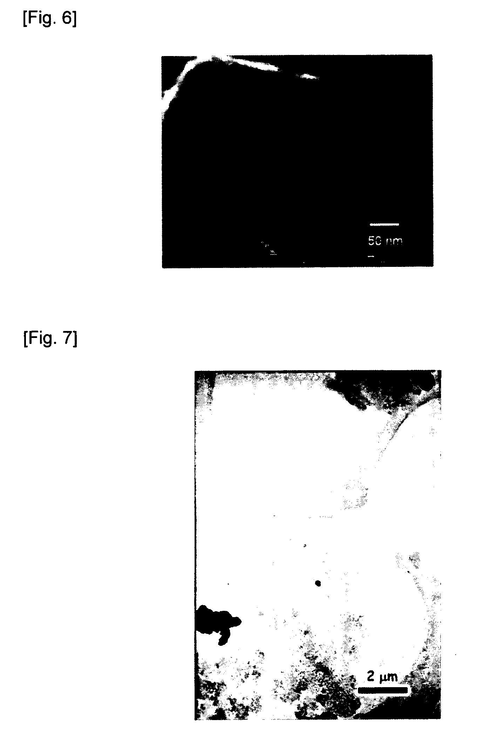

As a result of the observation using a field emission scanning microscope (JSM-7000F, manufactured by JEOL), the presence of platinum particles on the surface of the mesoporous carbon material was not confirmed. In other words, it is assumed that the reduction in pore volume was occurred not from the result that the platinum particles (white particles) merely clogged the openings of pores, but from the result that the platinum particles were supported inside of pores. (Fig. 6)

### (TEM photograph of the electrode catalyst carrying 30% by weight of Pt)

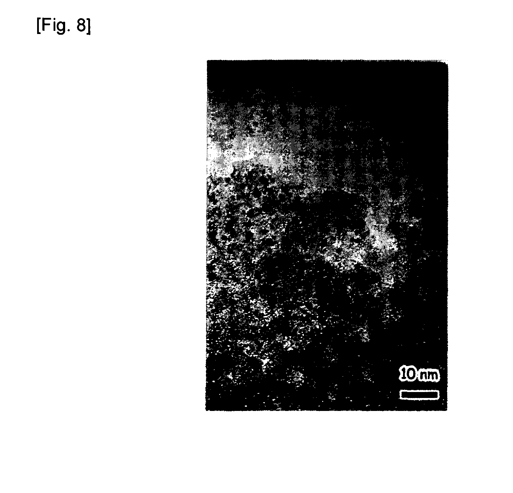

The sample was observed using a transmission electron microscope (H9000, manufactured by HITACHI), and as a result, it was found that aggregates of platinum particles (black) about 20 nm in grain size locally existed, and also dispersion of platinum particles (black) about 1.3 nm in grain size locally observed. (Fig. 7, Fig. 8)

### (Accurate thermogravimetric measurement of the electrode catalysts carrying 30% by weight of Pt and 40% by weight of Pt)

The actual amount (%) of the deposited platinum in the electrode catalyst was measured using an accurate thermogravimetric device (TGA-50, manufactured by SHIMADZU). The amounts of Pt in the electrode catalysts carrying 30% by weight of Pt and 40% by weight of Pt were 21.8% and 27.5%, respectively.

### (Surface area of platinum of the electrode catalysts carrying 40% by weight of Pt)

The surface area of platinum was calculated, based on the amount of platinum supported which was found from the accurate thermogravimetric measurement, and on the amount of hydrogen adsorbed which was measured by a high-speed specific surface area/pore distribution measuring device/micropore chemical adsorbing system (ASAP2020C, manufactured by Micromeritics), to find that the surface area of platinum was 42.7 m²/g Pt.

### (Production of a cathode of Example 1)

The surface of carbon rod (manufactured by Tokai Carbon) was polished with a 0.3 µm alumina paste for 10 minutes and with a 0.05 µm alumina paste for 10 minutes. Then, the polished carbon rod was subjected to ultrasonic cleaning with deionized water, and then degreasing with ethanol. The catalyst carrying 10 mg of Pt particles in pores of the mesoporous carbon material obtained above, was dispersed in 10 mL of propanol (manufactured by Wako Pure Chemical Industries Ltd.), by operating a ultrasonic homogenizer (manufactured by SONICS) for 10 minutes. Then, 14 µL of the resultant dispersion was cast, on a 5 mmφ carbon rod, followed by drying.
Further, a 5% Nafion solution (manufactured by Aldrich) was diluted 100 times with ethanol (manufactured by Wako Pure Chemical Industries Ltd.), and 9 µL of the diluted solution was cast, to the carbon rod, followed by drying, to produce a cathode of Example 1.

### (Evaluation of an oxygen-reduction reaction)

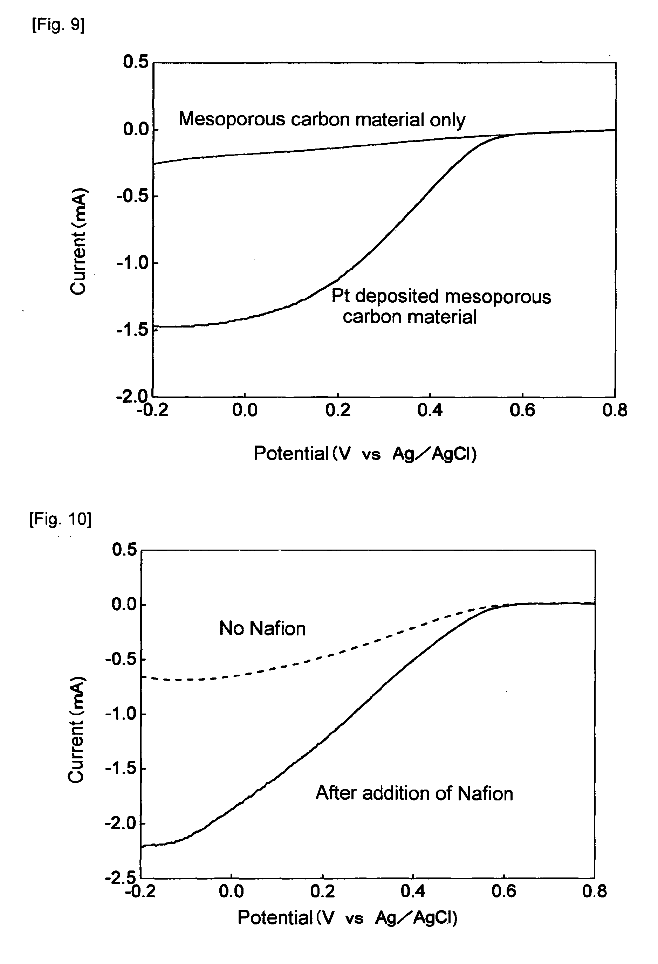

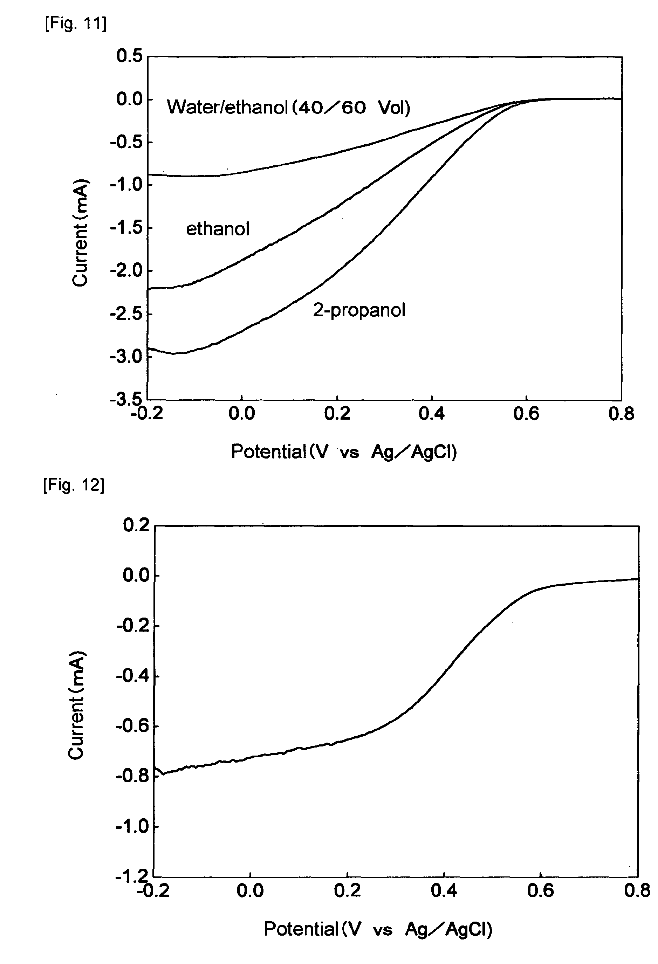

Using the cathodes produced in Example 1 and Reference Example (a mesoporous carbon support carrying no Pt) as a working electrode, a grassy carbon rod (manufactured by Tokai Carbon) as a counter electrode, and a double junction silver/silver chloride reference electrode (manufactured by ECO CHEMIE) as a reference electrode, the oxygen-reduction characteristics were evaluated in 0.1 M perchloric acid solution (a product manufactured by Wako Pure Chemical Industries Ltd. was diluted upon use) saturated with oxygen, by a potentiostat/galvanostat (AUTOLAB, manufactured by ECO CHEMIE). The results are shown in Fig. 9.
It can be seen that in the case of scanning at a rate of 50 mV/s between 1.0 V and -0.25 V, in the oxygen-reduction reaction, the catalyst in Reference Example (only the mesoporous carbon support) exhibited no activity, and the electrode catalyst according to the present invention (the mesoporous material carrying platinum) exhibited activity.
Further, the oxygen-reduction characteristics of the cathode produced using only the catalyst carrying 30% by weight of Pt (no Nafion) were evaluated. When this catalyst was scanned at a rate of 20 mV/s between 1.0 V and -0.25 V, the oxygen-reduction reactivity was low, but the cathode electrode to which Nafion was added exhibited a higher activity, and when the amount of Nafion was 4.5 µL, the electrode catalyst exhibited the same performance as the electrode catalyst obtained when the added amount of Nafion was 9 µL. (Fig. 10)
That is, it is assumed that it was possible to form a triple-phase interface in mesopores, by adding Nafion.
Further, a 5% Nafion solution (manufactured by Aldrich) was diluted 100 times with ethanol, 2-propanol, and water/ethanol (40/60 vol) (manufactured by Wako Pure Chemical Industries Ltd.), respectively, upon use. In the oxygen-reduction characteristics of the cathode produced using the catalyst carrying 30% by weight of Pt, the dependency on a solvent for diluting Nafion was evaluated. When scanning at a rate of 20 mV/s between 1.0 V and -0.25 V, the system using Nafion diluted with water/ethanol had the lowest activity, and the system using Nafion diluted with 2-propanol had the highest activity. (Fig. 11)
This is assumed that since the inside of pores of the mesoporous carbon material was hydrophobic, the use of a Nafion solution diluted with a more hydrophobic solvent made it possible to add Nafion in a larger amount in the pores, which accelerated the formation of a triple-phase interface, and therefore the oxygen-reduction reactivity was enhanced.

### (Evaluation of durability)

Using the cathode produced in Example 1 as the working electrode, a grassy carbon rod (manufactured by Tokai Carbon) as the counter electrode, and a double junction silver/silver chloride reference electrode (manufactured by ECO CHEMIE) as the reference electrode, the oxygen-reduction characteristics were evaluated in 0.1 M perchloric acid solution (a product manufactured by Wako Pure Chemical Industries Ltd. was diluted upon use) saturated with oxygen, by a potentiostat/galvanostat (AUTOLAB, manufactured by ECO CHEMIE).
Even if the catalyst was scanned at a rate of 50 mV/s, between 1.0 V and -0.25 V, under an argon atmosphere after this scanning cycle was repeated 10,000 times under an oxygen atmosphere, almost no change was observed in the hydrogen adsorption wave of platinum. Further, the growth of platinum particles was restricted.

### Example 2

### (Production of a mesoporous carbon membrane)

Resorcinol (manufactured by Wako Pure Chemical Industries Ltd.) in an amount of 0.41 g was dissolved in 1.09 g of deionized water/1.44 g of ethanol (manufactured by Wako Pure Chemical Industries Ltd.)/0.375 mL of 5M hydrochloric acid (manufactured by Wako Pure Chemical Industries Ltd.). To the resultant solution, 0.236 g of Pluronic F-127 (manufactured by SIGMA) was added, to dissolve the resultant mixture completely. Then, 0.30 g of triethyl orthoacetate (manufactured by Wako Pure Chemical Industries Ltd.) and 0.34 g of 37% formaldehyde manufactured by Wako Pure Chemical Industries Ltd.) were added thereto, and the resultant mixture was stirred at 30°C for 20 minutes. Then, 3 µl of this solution was cast, on a carbon rod (manufactured by Tokai Carbon), which was then heated at 95°C for 6 hours in an air blowing thermohygrostat (DMK300, manufactured by Yamato Scientific Co., Ltd.), to polymerize resorcinol and formaldehyde.
The obtained membrane was heated over three days according to a day-by-day condition in a nitrogen atmosphere, by using an infrared lamp heating treatment device (ULVAC-RIKO, SSA-P610C).
First day: the temperature of the system was raised at a rate of 1°C per minute from 20°C to 400°C. Then, the temperature was kept at 400°C for 3 hours.
Second day and third day: the temperature of the system was raised at a rate of 2°C per minute from 20°C to 800°C. Then, the temperature was kept at 800°C for 3 hours.
As a result, the target mesoporous carbon membrane was obtained as a composite of mesoporous carbon membrane/carbon rod.

### (Production of a Pt nano-sized colloid solution)

First, 10 mL of a hexachloroplatinic acid solution (200 mg hexachloroplatinic acid (manufactured by Aldrich)/10 mL ethylene glycol (manufactured by Wako Pure Chemical Industries Ltd.)) was added to 10 mL of 0.5 M NaOH (200 mg NaOH (manufactured by Wako Pure Chemical Industries Ltd.)/10 mL ethylene glycol (manufactured by Wako Pure Chemical Industries Ltd.)). Then, the resultant mixture was refluxed at 160°C under a nitrogen atmosphere for 3 hours, to obtain a colloid solution of platinum nano-sized particles about 1 nm in grain size (3.76 mg/mL ethylene glycol).

### (Production of a cathode of Example 2)

Hydrochloric acid (manufactured by Wako Pure Chemical Industries Ltd.) was added to the platinum nano-sized colloid/ethylene glycol solution, and the resultant solution was adjusted to pH 4 or less, to precipitate platinum particles once. Then, the precipitated platinum particles were re-dispersed in ethanol (manufactured by Wako Pure Chemical Industries Ltd.). This solution was cast, on a mesoporous carbon membrane in an amount of 10 µL, followed by drying, and further 10 µL of dichloromethane was added, on the above membrane, followed by drying, to give a cathode of Example 2.

### (Evaluation of an oxygen-reduction reaction)

Using the cathode produced in Example 2 as a working electrode, a grassy carbon rod (manufactured by Tokai Carbon) as a counter electrode, and a double junction silver/silver chloride reference electrode (manufactured by ECO CHEMIE) as a reference electrode, the oxygen-reduction characteristics were evaluated in 0.1 M perchloric acid solution (a product manufactured by Wako Pure Chemical Industries Ltd. was diluted upon use) saturated with oxygen, by a potentiostat/galvanostat (AUTOLAB, manufactured by ECO CHEMIE). The results are shown in Fig. 12.
It is found that when the catalyst was scanned at a rate of 50 mV/s between 1.0 V and -0.25 V, the electrode catalyst according to the present invention exhibited activity in the oxygen-reduction reaction, also in the case of producing the cathode by the method described in Example 2.

### Comparative Example 1

### (Synthetic Example of a 20 wt% Pt deposited carbon black catalyst)

First, 300 mg of carbon black (Vulcan XC-72R, manufactured by CABOT) was dispersed in 5 mL of an aqueous solution in which 214.5 mg of hexachloroplatinic (IV) acid hexahydrate (manufactured by Wako Pure Chemical Industries Ltd.) was dissolved. The resultant dispersion was reduced by adding 0.78 mL of 37% formaldehyde (manufactured by Wako Pure Chemical Industries Ltd.). Then, 0.5 M NaOH (manufactured by Wako Pure Chemical Industries Ltd.) was added, dropwise, to the dispersion until the pH thereof was increased to 14. After that, the resultant mixture was stirred at normal temperature for 15 minutes, and then refluxed at 90°C for 3 hours. Further, 2 to 3 mL of 1 M hydrochloric acid was added thereto, followed by filtration. The thus-obtained platinum deposited carbon black was thoroughly washed with deionized water, and dried under vacuum at 100°C for 10 hours, to synthesize a 20 wt% Pt deposited carbon black catalyst.

### (Production of a cathode)

This electrode catalyst was utilized, to produce a cathode of Comparative Example 1 in the same manner as in Example 1.

### (Evaluation of an oxygen-reduction reaction)

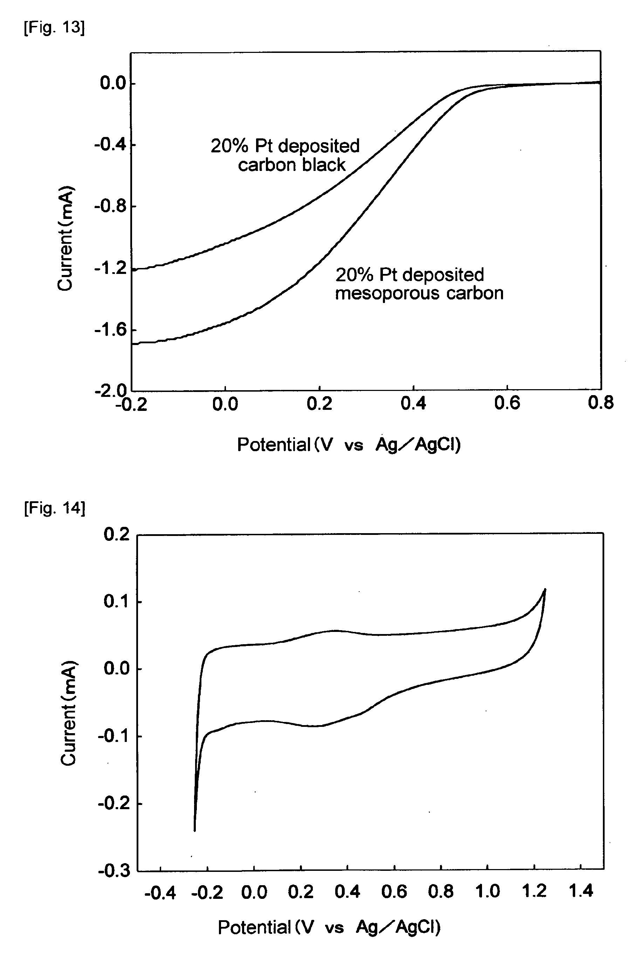

Using the cathodes produced in Example 1 and Comparative Example 1 as a working electrode, a grassy carbon rod (manufactured by Tokai Carbon) as a counter electrode, and a double junction silver/silver chloride reference electrode (manufactured by ECO CHEMIE) as a reference electrode, the oxygen-reduction characteristics were evaluated in 0.1 M perchloric acid solution (a product manufactured by Wako Pure Chemical Industries Ltd. was diluted upon use) saturated with oxygen, by a potentiostat/galvanostat (AUTOLAB, manufactured by ECO CHEMIE). The results are shown in Fig. 13.
It can be seen that, in the case of scanning at a rate of 50 mV/s between 1.0 V and -0.25 V, the electrode catalyst (20Pt-MC800) according to the present invention was quite higher in the activity than the electrode catalyst (20Pt-CB) of Comparative Example 1 in the oxygen-reduction reaction.

### Comparative Example 2

### (Production of a cathode)

A cathode of Comparative Example 2 was produced in the same manner as in Example 1, except that 50-wt% Pt deposited carbon black (TEC 10V50E, manufactured by Tanaka Kikinzoku) was used as the electrode catalyst in the production of the cathode of Example 1.

### (Electrochemical evaluation under an argon atmosphere)

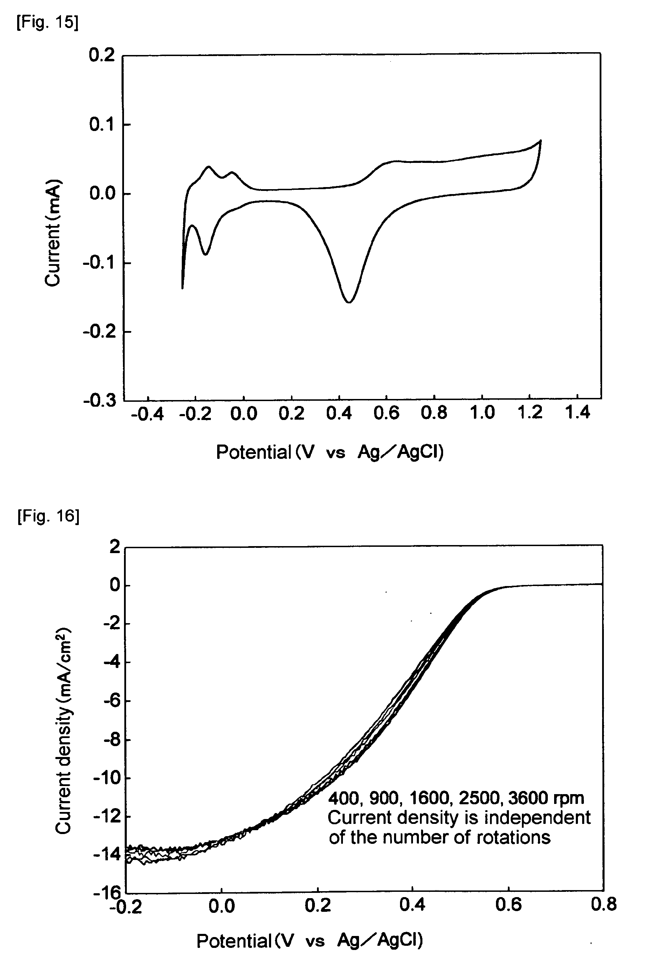

Using the cathodes (14 µg Pt/cm²) produced in Example 1 and Comparative Example 2 as a working electrode, a grassy carbon rod (manufactured by Tokai Carbon) as a counter electrode, and a double junction silver/silver chloride reference electrode (manufactured by ECO CHEMIE) as a reference electrode, the electrochemical characteristics were evaluated in 0.1 M perchloric acid solution (a product manufactured by Wako Pure Chemical Industries Ltd. was diluted upon use) saturated with oxygen, by a potentiostat/galvanostat (AUTOLAB, manufactured by ECO CHEMIE). The results are shown in Fig. 14 (Example 1: 20-wt% Pt deposited mesoporous carbon material) and Fig. 15 (Comparative Example 2: 50-wt% Pt deposited carbon black).
In the case of scanning at a rate of 50 mV/s between 1.25 V and -0.25 V, a clear difference in hydrogen adsorption wave was observed between these two. The diameter of platinum particles of the electrode catalyst according to the present invention is assumed to be small.

### (Evaluation of an oxygen-reduction reaction)

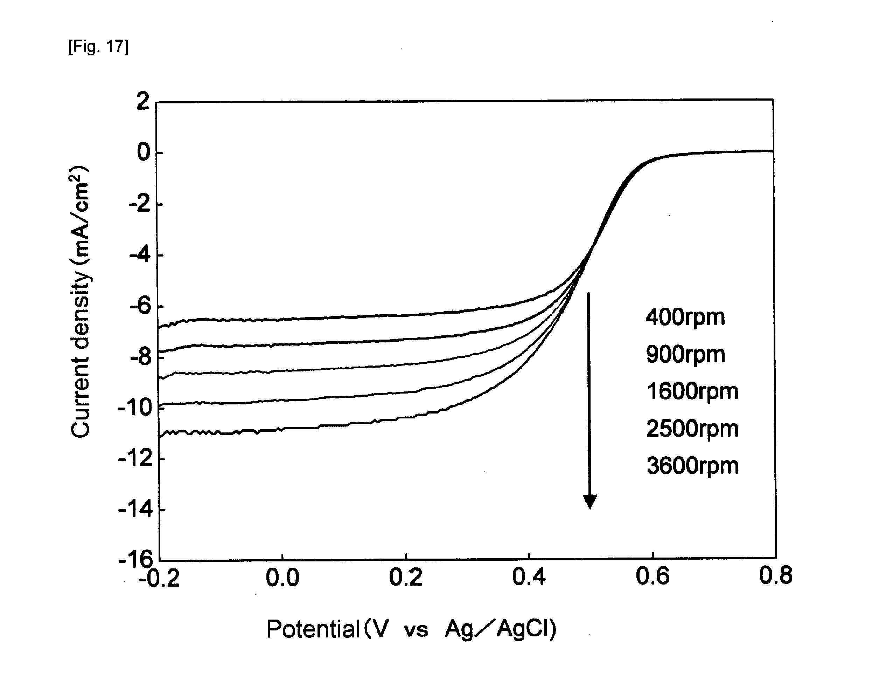

Using the cathodes produced in Example 1 and Comparative Example 2 as a working electrode, a grassy carbon rod (manufactured by Tokai Carbon) as a counter electrode, and a double junction silver/silver chloride reference electrode (manufactured by ECO CHEMIE) as a reference electrode, the oxygen-reduction characteristics were evaluated in 0.1 M perchloric acid solution (a product manufactured by Wako Pure Chemical Industries Ltd. was diluted upon use) saturated with oxygen, by a potentiostat/galvanostat (AUTOLAB, manufactured by ECO CHEMIE).
The results are shown in Fig. 16 (Example 1: 20-wt% Pt deposited mesoporous carbon material) and Fig. 17 (Comparative Example 2: 50-wt% Pt deposited carbon black).
It can be found that in the case of scanning at a rate of 50 mV/s between 1.0 V and -0.25 V, the electrode catalyst according to the present invention had a higher current value at a more negative potential, than the electrode catalyst of Comparative Example 2, in the oxygen-reduction reaction. It is also found that, with respect to the electrode catalyst according to the present invention, the oxygen reduction reaction activity is independent of the number of rotations of the electrode.

### Example 3

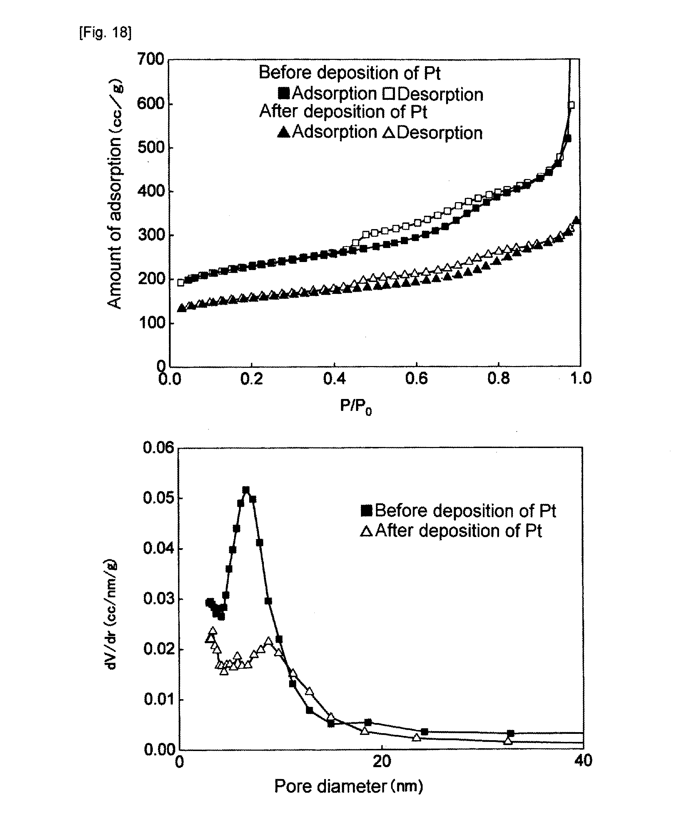

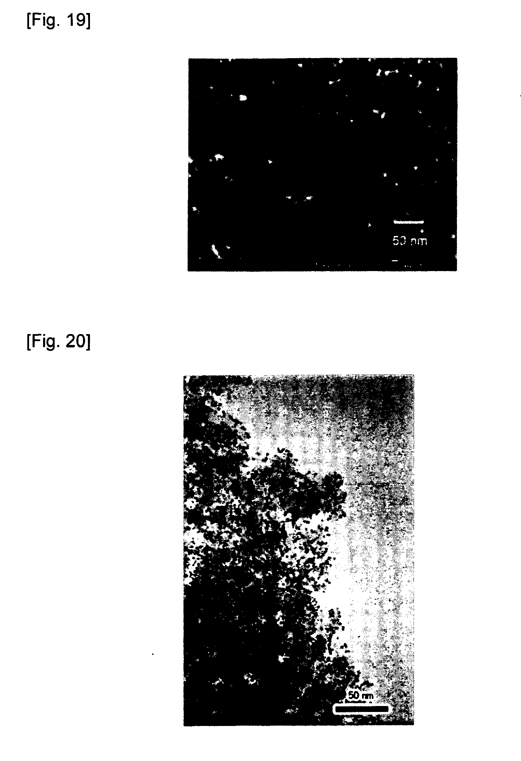

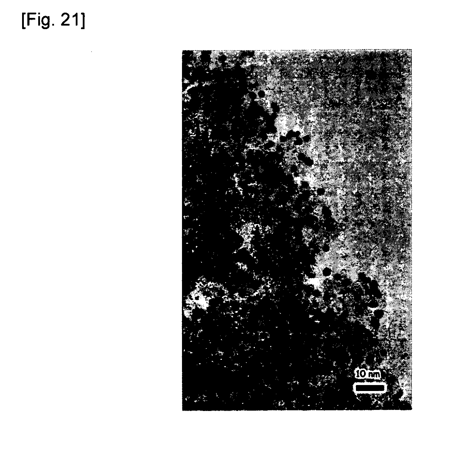

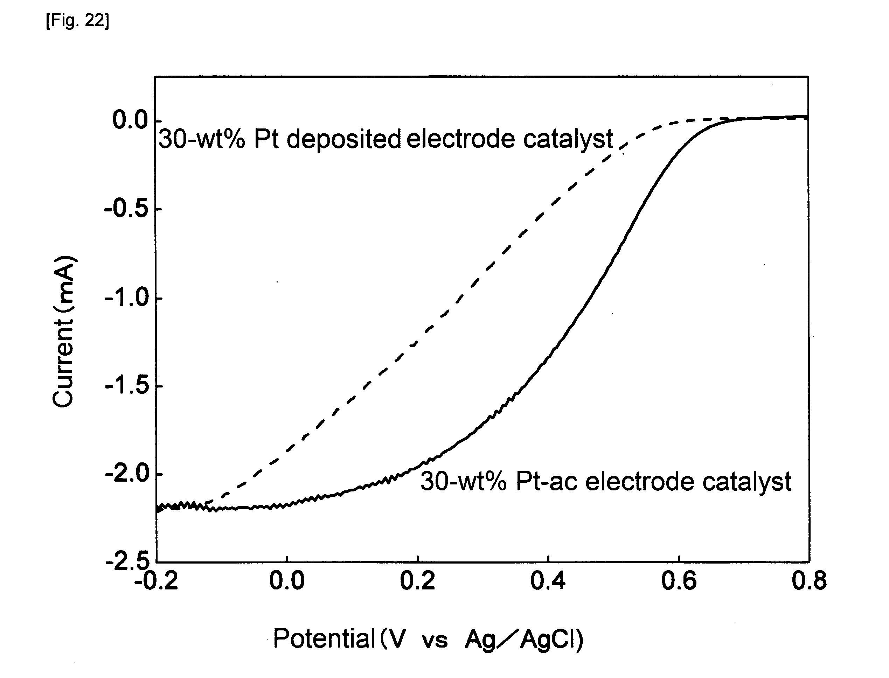

First, 5 mL of a dichloromethane (manufactured by Wako Pure Chemical Industries Ltd.) solution including 90.5 mg of platinum (II) acetylacetonate (manufactured by Aldrich) was added to 100 mg of the powdery mesoporous carbon material which was obtained in Synthetic 1, and the resultant mixture was dried under vacuum under stirring. The powdery sample was taken out of the flask and poured into a quartz boat, which was then heated under a nitrogen atmosphere by an infrared lamp heating treatment device (ULVAC-RIKO, SSA-P610C). The sample was heated at a rate of 1°C/min from 20°C to 210°C, kept at 210°C for 3 hours, further heated at a rate of 1°C/min until the temperature was raised to 240°C, and kept at 240°C for 3 hours, to accomplish reduction to Pt particles, thereby producing a 30 wt% Pt-ac electrode catalyst.
The measurement of adsorption of nitrogen to the product was made, using an independent multi-port-type specific surface area/pore distribution measuring device (QUADRASORB SI, manufactured by Qantachrome). The product had been dried at 200°C for 2 hours, as a pretreatment. It was observed that the volume of pores were decreased after Pt nano-sized particles were carried. (Fig. 18)
As a result of the observation using a field emission scanning microscope (JSM-7000F, manufactured by JEOL), the presence of platinum particles (white) on the surface of the mesoporous carbon material was confirmed. (Fig. 19)
The sample was observed using a transmission electron microscope (H9000, manufactured by HITACHI), and, as a result, it was found that platinum particles (black) having a grain size of about 2 to about 3 nm were quite well dispersed in the mesoporous carbon material. (Fig. 20, Fig. 21)
The actual amount (%) of the deposited platinum in the electrode catalyst was measured using an accurate thermogravimetric device (TGA-50, manufactured by SHIMADZU), which was 24.0%.
The surface area of platinum was calculated, based on the amount of platinum supported which was found from the accurate thermogravimetric measurement, and on the amount of hydrogen adsorbed which was measured by a high-speed specific surface area/pore distribution measuring device/micropore chemical adsorbing system (ASAP2020C, manufactured by Micromeritics), to find that the surface area of platinum was 87.0 m²/g Pt.
Using this electrode catalyst, a cathode of Example 3 was produced in the same manner as in Example 1. Using the cathode, a grassy carbon rod (manufactured by Tokai Carbon) as the counter electrode, and a double junction silver/silver chloride reference electrode (manufactured by ECO CHEMIE) as the reference electrode, the oxygen-reduction characteristics were evaluated in 0.1 M perchloric acid solution (a product manufactured by Wako Pure Chemical Industries Ltd. was diluted upon use) saturated with oxygen, by a potentiostat/galvanostat (AUTOLAB, manufactured by ECO CHEMIE). The results are shown in Fig. 22.
In the case of scanning at a rate of 20 mV/s between 1.0 V and -0.25 V, in an oxygen-reduction reaction, the electrode catalyst (30 wt% Pt-ac electrode catalyst) of Example 3 was enhanced in the oxygen-reduction activity, as compared to the electrode catalyst (30 wt% Pt deposited electrode catalyst) of Example 1.

### Example 4

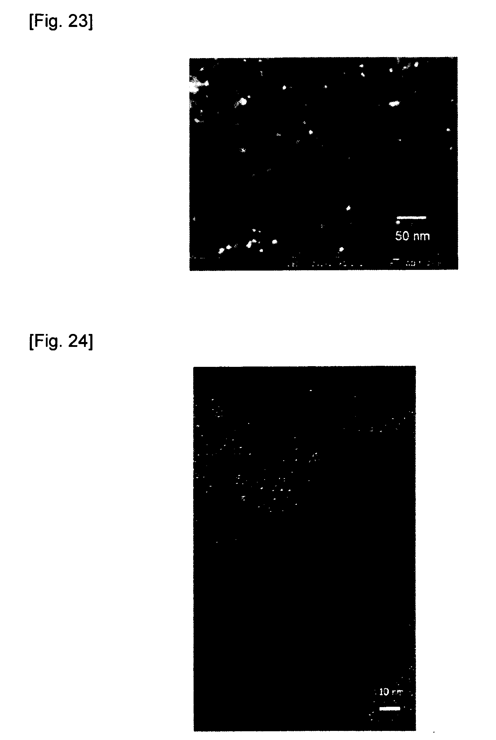

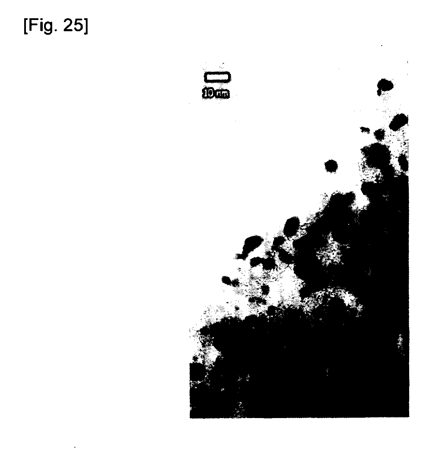

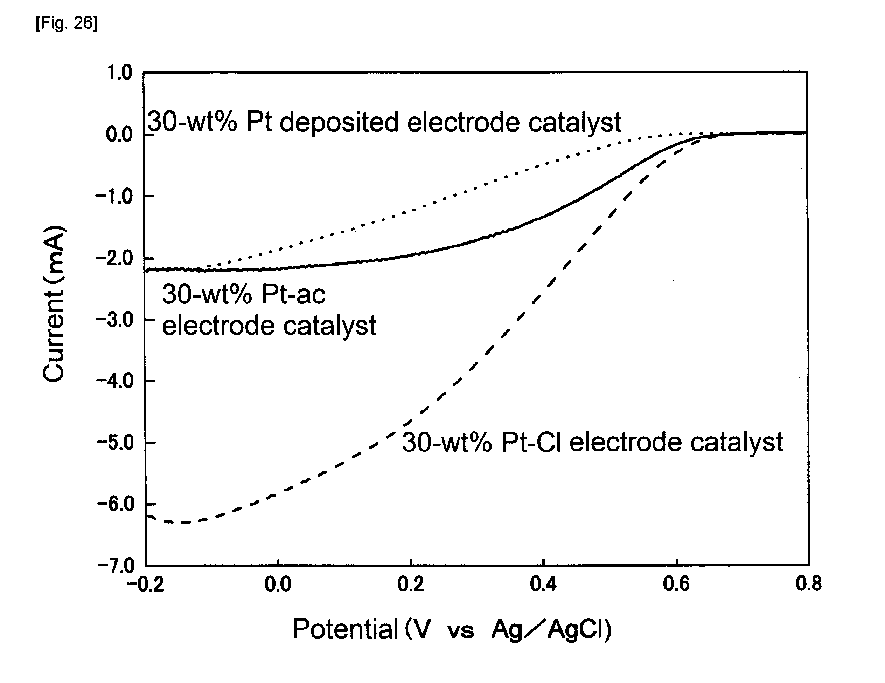

First, 3 mL of an acetone (manufactured by Wako Pure Chemical Industries Ltd.) solution including 90.0 mg of hexachloroplatinic acid hexahydrate (manufactured by Aldrich) was slowly added, dropwise, to 100 mg of the powdery mesoporous carbon material obtained in Synthetic Example 1, and the resultant mixture was dried under stirring. The powdery sample was taken out of the flask and poured into a quartz boat, which was then heated under a hydrogen atmosphere, by an infrared lamp heating treatment device (ULVAC-RIKO, SSA-P610C). The powdery sample was heated to 300°C from 20°C over 2 hours, to reduce the sample to Pt particles, thereby producing a 30 wt% Pt-Cl electrode catalyst.
As a result of the observation using a field emission scanning microscope (JSM-7000F, manufactured by JEOL), the presence of platinum particles (white) on the surface of the mesoporous carbon material was confirmed. (Fig. 23)
The sample was observed using a transmission electron microscope (H9000, manufactured by HITACHI), and as a result, it was found that platinum particles were locally observed, and a portion where platinum particles (black) having a grain size of about 1.5 nm existed and a portion where platinum particles (black) having a relatively large grain size about 4 to about 8 nm in grain size existed were both observed. (Fig. 24 and Fig. 25)
The actual amount (%) of the deposited platinum in the electrode catalyst was measured using an accurate thermogravimetric device (TGA-50, manufactured by SHIMADZU), which was 27.0%.
Using this electrode catalyst, a cathode of Example 4 was produced in the same manner as in Example 1. Using the cathode, a grassy carbon rod (manufactured by Tokai Carbon) as the counter electrode, and a double junction silver/silver chloride reference electrode (manufactured by ECO CHEMIE) as the reference electrode, the oxygen-reduction characteristics were evaluated in 0.1 M perchloric acid solution (a product manufactured by Wako Pure Chemical Industries Ltd. was diluted upon use) saturated with oxygen, by a potentiostat/galvanostat (AUTOLAB, manufactured by ECO CHEMIE). The results are shown in Fig. 26.
In the case of scanning at a rate of 20 mV/s between 1.0 V and -0.25 V, in an oxygen-reduction reaction, the electrode catalyst (30 wt% Pt-Cl electrode catalyst) of Example 4 was drastically enhanced in the oxygen-reduction activity, as compared to the electrode catalyst (30 wt% Pt deposited electrode catalyst) of Example 1 and the electrode catalyst (30 wt% Pt-ac electrode catalyst) of Example 3.

## Claims

1. An electrode catalyst for a fuel cell, comprising:
a mesoporous carbon support obtained by heating and baking for carbonization a mixture of a surfactant and carbon precursors; and
catalyst particles carried by the support.

2. A fuel cell, having:
a fuel electrode;
an air electrode; and
an electrolyte membrane interposed between the electrodes,
wherein at least one of the fuel electrode and the air electrode contains the electrode catalyst according to claim 1.
